# EUROPEAN PATENT SPECIFICATION

(11) **EP 2 354 543 B1**
(45) Date of publication and mention of the grant of the patent: **28.10.2015**
(21) Application number: 10000950.5
(22) Date of filing: 29.01.2010
(51) Int. Cl.: F03D 11/00, G01L 1/22, F03D 7/00

(54) **Method of attaching a load sensor to a surface of a rotor blade and rotor blade**
Verfahren zur Befestigung eines Lastsensors an der Oberfläche eines Rotorblatts und Rotorblatt
Procédé de fixation d'un capteur de charge à la surface d'une pale de rotor et pale de rotor

(43) Date of publication of application: 10.08.2011
(73) Proprietor: Siemens Aktiengesellschaft, 80333 München (DE)
(72) Inventor: Kristensen, Ole Jesper Dahl, 8740 Braedstrup (DK); Lind, Soeren Oemann, 4700 Naestved (DK); Mikkelsen, Jens Arne, 7400 Herning (DK); Pedersen, Soeren Markkilde, 3660 Stenlose (DK)

(56) References cited:
- EP-A1- 1 410 880
- WO-A1-2009/155396
- DE-A1- 2 617 987
- US-A- 3 621 437
- US-A- 3 853 000
- US-A1- 2003 150 276
- US-A1- 2005 084 344
- US-A1- 2009 129 925

## Description

The present invention concerns a method of attaching a load sensor to a surface of a rotor blade, the load sensor comprising a support with a number of strain gauges and a set of fixing holes with predefined distances. It also concerns a rotor blade with such load sensor attached to a surface of the rotor blade.

Rotor blades, more particularly rotor blades in wind turbine applications, need to be monitored with respect to the forces that put the blade under stress. The aim is to be able to control the static and/or dynamically oscillating load of the rotor blade in order to take countermeasures once the load or sum of dynamic load gets too big to find out if the unlikely event occurs that an exchange of the rotor blade (or parts of it) is necessary due to wear or preferably to control the load of the rotor blades of a wind turbine continuously avoiding the need for an exchange of a rotor blade or any other component of a wind turbine like e.g. a gearbox, pitch bearing, main bearing or similar.

In order to measure the load, i.e. the deflection of a blade caused by the pressure or compression onto such blade, so-called load sensors or strain measuring transducers are used, as described e.g. in US patent 3,853,000. A resistance strain gauge is mounted there on a thin strip of a plate-shaped support.

Such load sensors can be positioned on a surface by means of small spikes which can be dug into the surface. The load sensor is firmly fixed to the surface by bolts passing through holes in the sensor which bolts are welded to the structure of the surface. It has to be taken into account, however, that welding bolts to a surface of a rotor blade weakens the structure of the surface and is also not always possible due to incompatibility of the materials of the surface and of the bolts. For example it is difficult or even impossible to weld glass fibre or similar non-metallic materials. Furthermore, the spikes or pins of the load sensor may damage the structure of the surface when the nuts of the bolts are tightened.

US 3,621,437 discloses a strain gauge transducer which can be screwed onto a surface by means of two screws. Again, using such technique for attaching a load sensor to a rotor blade implies an injury to the rotor blade and the danger that the screws will gradually wear within the surface of the rotor blade. Further, the holes in the surface of the rotor blade have to be produced very exactly in order to avoid additional stress to either the rotor blade or the load sensor itself which latter might produce false measurements otherwise.

Another possibility how to fix a load sensor on a rotor blade is by adhesion, e.g. by glue or other kinds of pressure sensitive adhesive. However, such adhesion method is time-consuming and also means that the surface has to be prepared. It has to be polished and acid corroded and still it is often difficult to make sure that the load sensor is properly attached. In addition, changing a load sensor once it has been firmly adhered to the surface is again time-consuming and expensive and may lead to injuries of the surface.

Therefore it can be summed up that the currently available solutions of attaching load sensors of the principle described above and indeed of any other measure principle are still insufficient, in particular for an application like rotor blades of wind turbines. The surfaces of such rotor blades are of a special material and may suffer from damages to such an extent that the blades may become defect before or in operation.

It is therefore an object of the invention to provide for an improved possibility of how to attach a load sensor to the surface of a rotor blade. Another object of the invention is to provide a rotor blade with a load sensor attached in such improved manner.

According to the invention, this object is met by a method according to claim 1 and a rotor blade according to claim 12.

Thus, the above-mentioned method comprises the steps of
a) producing a set of holes in the surface of the rotor blade with a predefined distance between the holes essentially equal to the predefined distances of the fixing holes,
b) providing threaded inserts in the holes,
c) inserting bolts through the load sensor into the threaded inserts.

The set of holes is arranged in a predefined distance which corresponds with the distance of the fixing holes in the support of the load sensor. Thereby, the fixing holes in the load sensor may either be present in the workpiece as it comes from the manufacturer or may be drilled into it in the course of the method according to the invention.

In this way the load sensor is firmly connected to the surface of the rotor blade while it may also be easily removed for the purpose of exchange if necessary. By producing not just holes but by additionally providing these holes with threaded inserts, a very precise arrangement and alignment can be achieved, making sure that the bolts are positioned and aligned exactly as wished for. At the same time, the injury to the surface of the rotor blade is such that no unnecessary forces are exerted which might lead to damage of the rotor blade in a way that disables its functionality.

The holes can be produced in such a precise way that no unnecessary and uncontrollable stress is built up in the course of the operation of the rotor blade. Furthermore, the loads, i.e. static and/or dynamic oscillating loads that are to be measured by the load sensor are directly applied to the sensor coming from a few bolts at defined positions of the surface to be controlled. Therefore, unlike in the state of the art, the forces or loads are not applied from a multitude of pins or even from a rather undefined region of adhesion. The solution according to the invention makes measurement more reliable and more precise. In addition, the material and structure of the threaded inserts can be adopted to the specific demands of the structure of the surface into which they are inserted. They may be bolted or hammered into the holes of the surface.

A "bolt" in the context of the invention is preferably a bolt with an external thread at least partially along its longitudinal extension. Therefore "to bolt" signifies in this context the action of introducing such bolt into a hole with a thread at its inside by rotating the bolt along an axis defined by its longitudinal extension.

A rotor blade of the above-mentioned kind comprises
a) a set of holes in the surface with a predefined distance between the holes equal to the predefined distances of the fixing holes,
b) threaded inserts inside the holes,
c) bolts going through the fixing holes of the load sensor into each hole and threaded insert and thus connecting the load sensor with the rotor blade.

In such rotor blade, the load sensor is preferably connected to a turbine load control system. Such load control system derives control orders from the load values measured by the load sensor which control orders serve to reduce the load inflicted on the rotor blade in which the load sensor is placed and/or on all rotor blades of the rotor. For instance, the load control system may be programmed to derive control orders to initiate the reduction of rotation speed (e.g. signals to a break mechanism) and/or to change the pitch of the rotor blade or rotor blades and/or to activate additional devices that serve to reduce the load.

The load control system may also accumulate load values from the load sensor over time and, once these accumulated values reach a certain threshold value, generate an alarm signal to a user and/or control orders to stop operation of the rotor in order to facilitate a checkup and/or exchange of the rotor or parts of it.

In order to connect the load sensor with the load control system, it is particularly advantageous to use optical fibres for transmission as they are not affected by lightning strikes. The same applies to any other signal transmission connections in the context of this invention.

Particularly advantageous embodiments and features of the invention are given by the dependent claims, as revealed in the following description. Thereby, features revealed in the context of the method may also be realized in the context of the rotor blade and the other way round.

Concerning the threaded inserts used to accomodate the bolts, high standards have to be met concerning preciseness and mechanical stability. According to a first embodiment, at least one threaded insert is a helical insert. Such helical inserts are known under the trademark Heli-coil and are inserts made of coiled wire. They are usually over-sized so that they anchor themselves in the hole into which they are applied. In the context of the invention they offer stability and flexibility at the same time.

In a second embodiment which may be used alternatively or in addition to the first embodiment at least one threaded insert is a bush comprising threads on its inner side. The stability of such bushes can be even higher than that of helical inserts so that first tests have proven that this second embodiment is particularly advantageous.

Preferably, threaded inserts comprising corbels at their one longitudinal end are put into the holes in such way that the corbels come in direct or indirect contact with the surface of the blade. Such corbel functions like a stopper which indicates when the threaded insert has reached its final position in the hole. In such final position the insert is firmly connected to the hole and fills the hole to such an extent that a sufficient stability for the bolts is achieved. The use of a threaded insert with a corbel also guarantees that the insert is not inserted further into the surface of the rotor blade than wished for, thereby making sure that the hole is not extended by the insert which might lead to damage of the surface of the blade. Indirect contact of the corbel with the surface can be realized for example by washers or similar distance pieces firmly positioned in between the corbel and the surface.

The predefined distance between the holes can be achieved for example by simply measuring and marking the distance on the surface of the rotor blade and then producing the holes in those locations indicated by markings. In order to increase preciseness with respect to the predefined distance and possibly also to the positioning angle of the holes it is preferred to use a hole production template with template holes in the same predefined distances which template is put onto the surface. Through the template holes a hole producing tool such as a drilling machine is the guided onto the surface.

Such template is preferably made up of a board or plate with the holes of which may be extended by cylindrical tubes projecting from the plane of the board, preferably in a perpendicular angle in at least one direction. In this way, a drill can be guided by the tubes which makes sure that the hole is produced in the correct angle.

Therefore, the invention also comprises the use of a hole production template for producing a set of holes on a surface of a rotor blade with a predefined distance between the holes in the context of the method according to the invention. The hole production template comprises a board with holes in an arrangement with the same predefined distances as the distances between the set of holes to be produced on the rotor blade.

Preferably the template comprises at least three positioning legs projecting from a contact surface of the board. In this context, it has proven to be most advantageous to use a template with exactly three such legs as this guarantees that the template may be positioned very precisely on a surface even if it is slightly curved as is often the case with rotor blades.

Preferably, the legs are realized as hollow tubes through which a fixing means such as a pin or the like can be guided. This construction makes it possible to pre-fix the template via these fixing means on the surface in order to make sure the template does not accidentally change its position during its application.

The template may further comprise an indication of an orientation of the template which indirectly indicates the orientation of the load sensor when later attached to the surface. This indication preferably comprises a triangular shape of the template, whereby it is advantageous that the orientation of the load sensor, i.e. the direction in which load forces are measured is indicated by one angle of the triangle.

According to a particularly preferred embodiment of the invention, the load sensor is attached on an inner surface of the blade. Rotor blades of wind turbines (unlike helicopter blades) are usually hollow and thus comprise an outer and an inner surface. Attaching the load sensor on the inner surface means that the sensor is protected from wind and from humidity at least to a much higher extent. It can also be easier accessed by the responsible staff from the inner side of the turbine through the tower, the nacelle and the hub. When operating from inside the rotor blade, the staff are much better protected than if they worked on scaffolds outside because the danger of falling down from the rotor is virtually eliminated.

A single load sensor can already provide great insight into the loads inflicted upon the rotor blade, in particular in plurality of load sensors is mounted on the surface of the blade. This way, the load sensors can be orientated in more than one direction and thus measure load forces coming from different angles. In addition, the load sensors may be positioned in several locations along the longitudinal extension of the rotor blade and therefore may give a broader picture of which loads the rotor blade is confronted with along its length.

That part of the rotor blade which is closest to the hub of the rotor is in highest danger of getting damaged. It is in this region that the load forces are highest and that all forces accumulate before being directed onto the shaft of the rotor. Therefore, this region is particularly prone to damage by loads which exceed a certain maximum threshold. Therefore, in order to closely monitor this region, the load sensor is preferably mounted in close proximity of an interface between the blade and a hub of a rotor. The close proximity is considered to be reached within the closest third, particularly in the closest fifth, and most particularly in the closest tenth of the rotor blade with respect to the hub.

While attaching a load sensor using a method according to the state of the art is already difficult on a brand new rotor blade, these obstacles are even greater when it comes to a re-equipment of a blade that has already been in operation. Therefore, the method according to the invention is even more helpful if the load sensor is attached to a blade which has already been in operational service. Neither will it be necessary to weld any bolts onto the surface of such blade nor to prepare the surface - which is even more tedious to carry out because of the wear of the blade and because of its impurity due to operation. The method according to the invention therefore provides for a much easier possibility to equip existing wind turbines with a load sensor system for the first time or as a replacement of old load sensors.

In order to protect the load sensor from outside influence such as forces which might damage it or influence measurement and such as dirt and humidity, it is preferred that a housing which protects the load sensor is attached to the surface of the blade. This housing may comprise a lid which can simply be put over the load sensor and fixed to the surface. In addition to simply covering the load sensor, the housing can also be made waterproof or even moistureproof in order to avoid corrosion of the load sensor.

Preferably, the load sensor is connected to a load controller via cable, be it optical or electric, or in a wireless way.

The controller may be positioned within a housing in order to be protected from its environment. Between the controller and the load sensor, there may also be a transmitter which transmits signals from the load sensors to the controller and which may also collect signals from a plurality of load sensors.

It is furthermore preferred to produce the holes into the surface of the blade in such way that the angle between the main extension of the holes and the surface is essentially perpendicular. The main extension of the surface can be considered to be a plane representing an average extension of the surface, e.g. in the case of a curved surface. The angle is still considered to be essentially perpendicular when it varies by +/- 10% from 90°. This limited angle can be considered to be a good reference as to how the bolts are orientated. In addition, when using an essentially rectangular orientation for the bolts, the transmission of load forces is without any greater losses because otherwise a part of the forces might be directed in other directions than the one covered by the load sensor.

Also for the purpose of clarity of measurement it is preferred that exactly two bolts are used to attach the load sensor. That also means that only two holes must be produced and only two threaded inserts put into these holes. Firstly, this means that the smallest possible damage is done to the surface. Secondly, this attachment method is not only more than sufficient to attach the load sensor, but also guarantees that as little other influences as possible will endager the exactness of the measurement. For example, if the load sensor is attached via more than two bolts, tension forces might play an additional role and tamper the measurement results.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a section view of a surface of a rotor blade while being subject to an embodiment of a method according to the invention,
Fig. 2 shows the same view with a rotor blade completed according to an embodiment of the invention,
Fig. 3 shows a shematic view into the inside of parts of a rotor of a wind turbine,
Fig. 4 shows a schematic block diagramm of steps of an embodiment of the method according to the invention,
Fig. 5 shows a top view of a template according to an embodiment of the invention,
Fig. 6 shows a side view of the same template as in Fig. 5.

In the drawings, like reference numbers refer to like objects throughout. Objects in the diagrams are not necessarily drawn to scale.

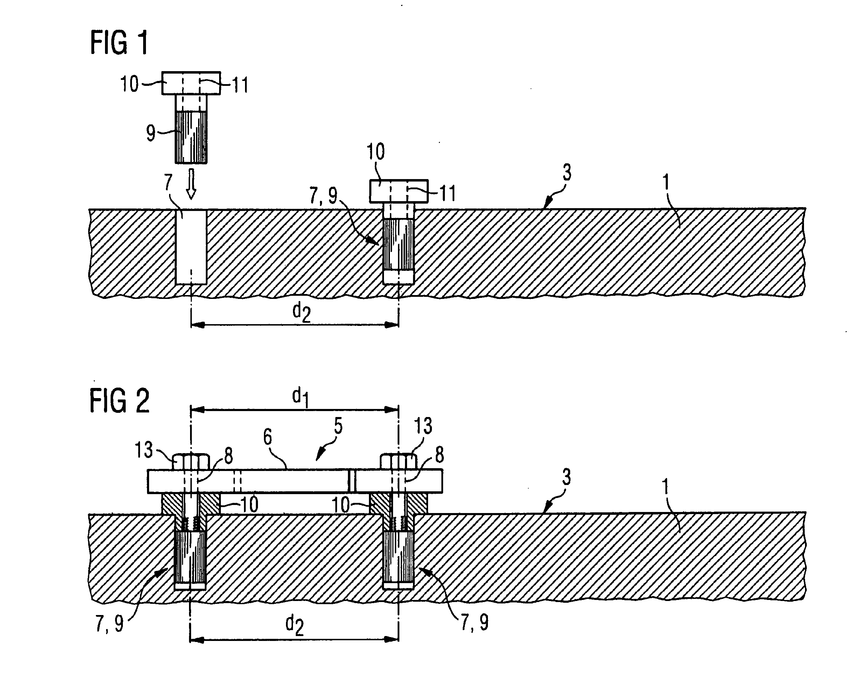

Fig. 1 shows a surface 3 of a rotor blade 1, which is the inner surface of the rotor blade 1. In order to attach a load sensor, e.g. a load sensor working under the principle of a load sensor as shown in US patent 3,853,000, a set of holes 7 is drilled into the surface 3 at a distance d₂ corresponding with the distance d₁ of fixing holes 8 in the load sensor (cf. Fig. 2). Those holes 7 are furnished with threaded inserts 9. The threaded inserts 9 are realized as bushes with threads on their inside 11 and comprise corbels 10 at their top longitudinal end.

On the left hand side one can see a bush 9 while being inserted into a hole 7, whilst on the right hand side a bush 9 is already positioned in a hole 7, though not in its final position yet. This final position will be reached when the corbel 10 is in touch with the surface 3.

This situation can be seen in Fig. 2 in which both bushes 9 are in their final positions within the surface 3 of the rotor blade 1. In addition, a load sensor 5 is fixed to the surface 3 by bolts 13 that have been bolted or screwed into the inner side 11 of the bushes 9. The load sensor 5 comprises a plate-shaped support 6 with two fixing holes 8. It is lying on the corbels 10 of the bushes, pressed there by the bolts 13. Exactly two bolts 13 are necessary and sufficient to fix the load sensor 5 to the surface 3.

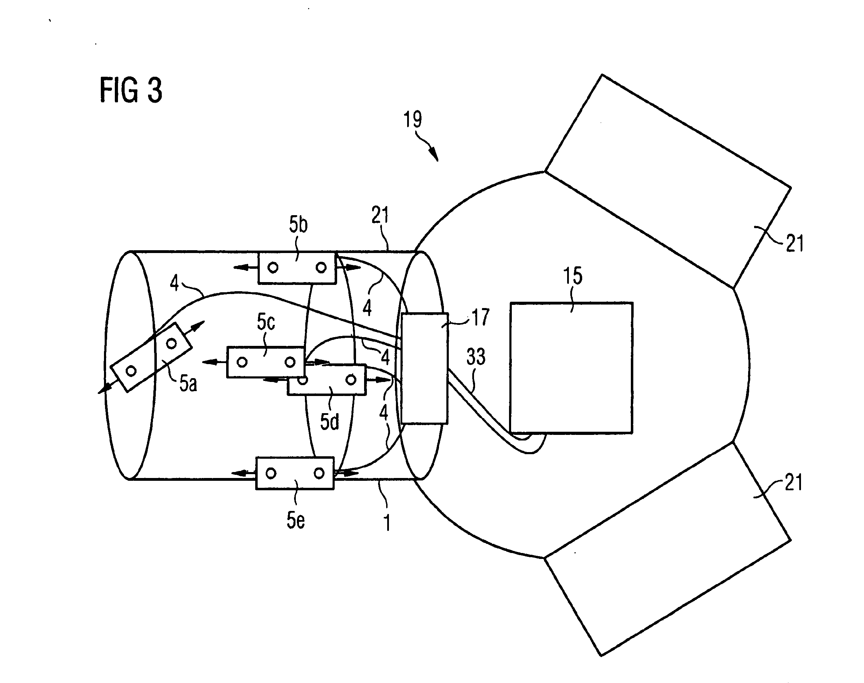

In Fig. 3 the location of load sensors 5a, 5b, 5c, 5d, 5e is shown in principle. On a rotor of a wind turbine the hub 15 has three interfaces 21 at which rotor blades 1 are connected, one of which rotor blades 1 can be seen in the figure. The rotor blade 1 has a diameter of 1,6 metres and a length of more than 40 metres, which is typical for rotor blades of the current generations of wind turbines. The load sensors 5a, 5b, 5c, 5d, 5e are positioned within that tenth of the longitudinal extension of the rotor blade 1 which is closest to the interface 21, i.e. within the first 4 metres of the rotor blade 1 coming from the hub 15. In this way it is made sure that loads are measured in that region which is most prone to be damaged due to overloading and where a damage can do most harm to persons or objects in the surrounding area of the wind turbine.

The outermost load sensor 5a has an angular orientation in comparison with the orientation of the other four load sensors 5b, 5c, 5d, 5e which are positioned closer to the hub 15 and the orientation of which is along the longitudinal extension of the rotor blade 1. Therefore, the latter load sensors 5b, 5c, 5d, 5e will all measure load forces in the longitudinal direction of the rotor blade 1, whilst the firstly mentioned load sensor 5a measures forces in an angular direction to the longitudinal direction. The measurement directions are indicated with arrows at the side of each of the load sensors 5a, 5b, 5c, 5d, 5e.

Signals from the load sensors 5a, 5b, 5c, 5d, 5e are transmitted via wireless transmission conncetions 4 (indicated as lines) to a transmitter 17 located at the very end of the rotor blade 1 where it projects into the hub 15. The transmitter 17 transmitts combined signals via an optical cable 33 further to a controller 19 of a turbine load control system which derives orders - if necessary - to reduce the load on rotor blade 1 and possibly on other rotor blades as well.

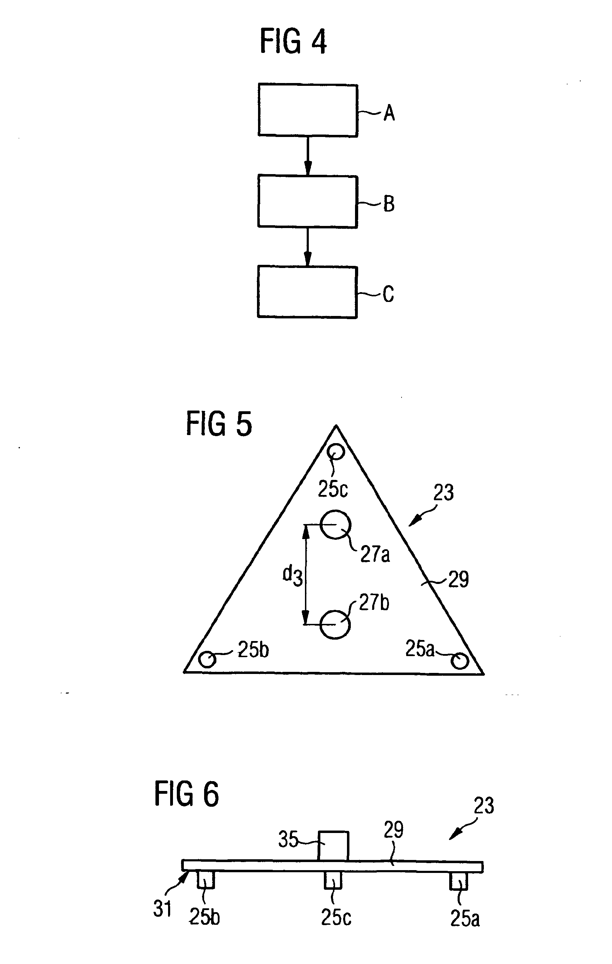

Fig. 4 shows a schematic flowchart of an embodiment of the method according to the invention. This is explained with reference to the preceding figures.

In a first step A the set of holes 7 is drilled into the surface 3 of the rotor blade 1 at a predefined distance d. In a second step B the bushes 9 are inserted into the holes 7. In a third step C the bolts 13 are bolted into the bushes, thereby fixing the load sensor 5 to the surface.

Figures 5 and 6 show an embodiment of a drilling template 23 according to the invention.

As seen from above, the template 23 is triangularly shaped and thus indicates how a load sensor 5 will be orientated if aligned along holes 7 produced with the template 23. The template 23 comprises a board or plate 29 with holes 27a, 27b. These holes 27a, 27b are distanced from each other at the same distance d₃ as shown in Figs. 1 and 2, i.e. the distance d₂ of the holes 7 that are introduced into the surface 3 and the distance d₁ of the fixing holes 8. In addition, as can be seen best in the side view of Fig. 6, the template 23 comprises three legs 25a, 25b, 25c which are realized as tubes projecting from a contact surface 31 of the board 29 which is directed towards the surface 3 of the rotor blade 1 when the template 23 is used. Through the tubes of the legs 25a, 25b, 25c, a nail or a pin can be pushed which helps to temporarily fix the template at a particular location on the surface 3.

The holes 27a, 27b are also extended by tubes 35 which project out of the board 29 in the direction away from the contact surface 31. The tubes 35 give a drilling tool inserted into them a certain guidance which guarantees that the drill is inserted into the surface 3 of the rotor blade 1 at a predefined angle, preferably essentially 90°, maybe with a little and tolerable variance.

Because the template 23 has exactly three legs 25a, 25b, 25c, it can also be firmly put on curved surfaces 3, even such surfaces which are curved in more than one direction with respect to a plane. Such is usually the case in rotor blade applications.

Although the present invention has been disclosed in the form of preferred embodiments and variations thereon, it will be understood that numerous additional modifications and variations could be made thereto without departing from the scope of the invention as defined by the appended claims. While the use of load sensors based on measurement of resistances was used as a basis for the description, other load sensor systems may be used to good effect in the context of the method and rotor blade according to the invention as well. Furthermore, the orientation of load sensors within the rotor blade, is purely shown as an example and may be altered in accordance with the relevant needs in their place of operation. Also, the use of a drilling template is not limited to the embodiment of template as shown in figures 5 and 6.

For the sake of clarity, it is to be understood that the use of "a" or "an" throughout this application does not exclude a plurality, and "comprising" does not exclude other steps or elements. The expression "distances" also includes a single distance. A "unit" or "module" can comprise a number of units or modules, unless otherwise stated.

## Claims

1. A method of attaching a load sensor (5, 5a, 5b, 5c, 5d, 5e) to a surface (3) of a rotor blade (1), the load sensor (5, 5a, 5b, 5c, 5d, 5e) comprising a support (6) with a number of strain gauges and a set of fixing holes (8) with predefined distances (d₁), the method comprising the steps of
a) producing a set of holes (7) in the surface (3) of the rotor blade (3) with predefined distances (d₂) between the holes (7) essentially equal to the predefined distances (d₁) of the fixing holes (8),
b) providing threaded inserts (9) in the holes (7),
c) inserting bolts (13) through the load sensor (5, 5a, 5b, 5c, 5d, 5e) into the threaded inserts (9).

2. A method according to claim 1, whereby at least one threaded insert is a helical insert.

3. A method according to claim 1 or 2, whereby at least one threaded insert is a bush (9) comprising threads on its inner side (11).

4. A method according to any one of the preceding claims, whereby threaded inserts (9) comprising corbels (10) at their one longitudinal end are put into the holes (7) in such way that the corbels (10) come in direct or indirect contact with the surface (3) of the blade (1).

5. A method according to any one of the preceding claims, whereby the predefined distance d₂) between the holes (7) is realized by the usage of a hole production template (23) with template holes (27a, 27b) in the same predefined distance (d₃) which template (23) is put onto the surface (3) and through which template holes (27a, 27b) a hole producing tool is guided onto the surface (3).

6. A method according to any one of the preceding claims, whereby the load sensor (5, 5a, 5b, 5c, 5d, 5e) is attached on an inner surface (3) of the blade (1).

7. A method according to any one of the preceding claims, whereby the load sensor (5, 5a, 5b, 5c, 5d, 5e) is mounted in close proximity of an interface between the blade (1) and a hub (15) of a rotor.

8. A method according to any one of the preceeding claims, whereby a housing which protects the load sensor (5, 5a, 5b, 5c, 5d, 5e) is attached to the surface (3) of the blade (1).

9. A method according to claim 8, whereby the load sensor (5, 5a, 5b, 5c, 5d, 5e) is connected to a load controller (19) via cable and/or in a wireless way.

10. A method according to any one of the preceding claims, whereby the holes (7) are produced in the surface (3) of the blade (1) in such way that the angle between the main extension of the holes (7) and the surface (3) is essentially perpendicular.

11. A method according to any one of the preceding claims, whereby two bolts (13) are used to attach the load sensor (5, 5a, 5b, 5c, 5d, 5e).

12. Rotor blade (1) with a load sensor (5, 5a, 5b, 5c, 5d, 5e) attached to a surface (3) of the rotor blade (1), the load sensor (5, 5a, 5b, 5c, 5d, 5e) comprising a support (6) with a number of strain gauges and a set of fixing holes (8) with predefined distances (d₁), the rotor blade comprising
a) a set of holes (7) in the surface (3) with predefined distance (d₂) between the holes (7) equal to the predefined distances (d₁) of the fixing holes (8),
b) threaded inserts (9) inside the holes (7),
c) bolts (13) going through the fixing holes (8) of the load sensor (5, 5a, 5b, 5c, 5d, 5e) into each hole (7) and threaded insert (9) and thus connecting the load sensor (5, 5a, 5b, 5c, 5d, 5e) with the rotor blade (1).

13. Use of a hole production template (23) for producing a set of holes (7) on a surface (3) of a rotor blade (1) with predefined distances (d₂) between the holes (7) according to a method according to any one of claims 1 to 11, the hole production template (23) comprising a board (29) with holes (27a, 27b) in an arrangement with the same predefined distances (d₃) as the distances (d₂) between the set of holes (7) to be produced on the rotor blade (1).

14. Use according to claim 13, whereby the hole production template (23) comprises at least three positioning legs (25a, 25b, 25c) projecting from a contact surface (31) of the board (29).

15. Use according to claim 13 or 14, the hole production template (23) comprising an indication of an orientation of the template indirectly indicating the orientation of the load sensor (5, 5a, 5b, 5c, 5d, 5e) when later attached to the surface (3), the indication preferably comprising a triangular shape of the template.

## Patentansprüche

1. Verfahren zum Befestigen eines Lastsensors (5, 5a, 5b, 5c, 5d, 5e) an einer Fläche (3) eines Rotorblattes (1), wobei der Lastsensor (5, 5a, 5b, 5c, 5d, 5e) einen Träger (6) mit einer Anzahl von Dehnungsmessstreifen und einem Satz von Befestigungslöchern (8) mit vordefinierten Abständen (d₁) umfasst, wobei das Verfahren die folgenden Schritte umfasst:
a) Herstellen eines Satzes von Löchern (7) in der Fläche (3) des Rotorblattes (3) mit vordefinierten Abständen (d₂) zwischen den Löchern (7), die im Wesentlichen gleich den vordefinierten Abständen (d₁) der Befestigungslöcher (8) sind,
b) Vorsehen von Gewindeeinsätzen (9) in den Löchern (7),
c) Einsetzen von Bolzen (13) durch den Lastsensor (5, 5a, 5b, 5c, 5d, 5e) hindurch in die Gewindeeinsätze (9).

2. Verfahren nach Anspruch 1, wobei wenigstens ein Gewindeeinsatz ein schraubenförmiger Einsatz ist.

3. Verfahren nach Anspruch 1 oder 2, wobei wenigstens ein Gewindeeinsatz eine Buchse (9) ist, die ein Gewinde auf ihrer Innenseite (11) umfasst.

4. Verfahren nach einem der vorhergehenden Ansprüche, wobei Gewindeeinsätze (9), welche Auskragungen (10) an ihrem einen Längsende umfassen, auf eine solche Weise in die Löcher (7) eingesetzt werden, dass die Auskragungen (10) in direkten oder indirekten Kontakt mit der Fläche (3) des Rotorblattes (1) kommen.

5. Verfahren nach einem der vorhergehenden Ansprüche, wobei der vordefinierte Abstand (d₂) zwischen den Löchern (7) durch die Verwendung einer Lochherstellungs-Schablone (23) mit Schablonenlöchern (27a, 27b) in demselben vordefinierten Abstand (d₃) erzielt wird, wobei diese Schablone (23) auf die Fläche (3) gesetzt wird, und wobei durch diese Schablonenlöcher (27a, 27b) hindurch ein Lochherstellungswerkzeug zu der Fläche (3) geführt wird.

6. Verfahren nach einem der vorhergehenden Ansprüche, wobei der Lastsensor (5, 5a, 5b, 5c, 5d, 5e) auf einer inneren Fläche (3) des Rotorblattes (1) befestigt wird.

7. Verfahren nach einem der vorhergehenden Ansprüche, wobei der Lastsensor (5, 5a, 5b, 5c, 5d, 5e) in unmittelbarer Nähe einer Grenzfläche zwischen dem Rotorblatt (1) und einer Nabe (15) eines Rotors angebracht wird.

8. Verfahren nach einem der vorhergehenden Ansprüche, wobei ein Gehäuse, welches den Lastsensor (5, 5a, 5b, 5c, 5d, 5e) schützt, an der Fläche (3) des Rotorblattes (1) befestigt wird.

9. Verfahren nach Anspruch 8, wobei der Lastsensor (5, 5a, 5b, 5c, 5d, 5e) mit einem Lastregler (19) über Kabel und/oder drahtlos verbunden ist.

10. Verfahren nach einem der vorhergehenden Ansprüche, wobei die Löcher (7) in der Fläche (3) des Rotorblattes (1) auf eine solche Weise hergestellt werden, dass der Winkel zwischen der Haupterstreckung der Löcher (7) und der Fläche (3) im Wesentlichen ein rechter Winkel ist.

11. Verfahren nach einem der vorhergehenden Ansprüche, wobei zwei Bolzen (13) verwendet werden, um den Lastsensor (5, 5a, 5b, 5c, 5d, 5e) zu befestigen.

12. Rotorblatt (1) mit einem Lastsensor (5, 5a, 5b, 5c, 5d, 5e), der an einer Fläche (3) des Rotorblattes (1) befestigt ist, wobei der Lastsensor (5, 5a, 5b, 5c, 5d, 5e) einen Träger (6) mit einer Anzahl von Dehnungsmessstreifen und einem Satz von Befestigungslöchern (8) mit vordefinierten Abständen (d₁) umfasst, wobei das Rotorblatt umfasst:
a) einen Satz von Löchern (7) in der Fläche (3) mit vordefinierten Abständen (d₂) zwischen den Löchern (7), die gleich den vordefinierten Abständen (d₁) der Befestigungslöcher (8) sind,
b) Gewindeeinsätze (9) innerhalb der Löcher (7),
c) Bolzen (13), die durch die Befestigungslöcher (8) des Lastsensors (5, 5a, 5b, 5c, 5d, 5e) hindurch in die einzelnen Löcher (7) und den Gewindeeinsatz (9) geschraubt sind und somit den Lastsensor (5, 5a, 5b, 5c, 5d, 5e) mit dem Rotorblatt (1) verbinden.

13. Verwendung einer Lochherstellungs-Schablone (23) zum Herstellen eines Satzes von Löchern (7) auf einer Fläche (3) eines Rotorblattes (1) mit vordefinierten Abständen (d₂) zwischen den Löchern (7) gemäß einem Verfahren nach einem der Ansprüche 1 bis 11, wobei die Lochherstellungs-Schablone (23) eine Platte (29) mit Löchern (27a, 27b) in einer Anordnung mit vordefinierten Abständen (d₃) umfasst, welche dieselben sind wie die Abstände (d₂) zwischen dem Satz von Löchern (7), die auf dem Rotorblatt (1) hergestellt werden sollen.

14. Verwendung nach Anspruch 13, wobei die Lochherstellungs-Schablone (23) wenigstens drei Positionierfüße (25a, 25b, 25c) umfasst, die von einer Kontaktfläche (31) der Platte (29) aus vorstehen.

15. Verwendung nach Anspruch 13 oder 14, wobei die Lochherstellungs-Schablone (23) einen Hinweis auf eine Ausrichtung der Schablone umfasst, der indirekt auf die Ausrichtung des Lastsensors (5, 5a, 5b, 5c, 5d, 5e) hinweist, wenn Letzterer an der Fläche (3) befestigt ist, wobei der Hinweis vorzugsweise eine dreieckige Form der Schablone umfasst.

## Revendications

1. Procédé de fixation d'un capteur de charge (5, 5a, 5b, 5c, 5d, 5e) à une surface (3) d'une pale de rotor (1), le capteur de charge (5, 5a, 5b, 5c, 5d, 5e) comprenant un support (6) avec une quantité d'extensomètres et un ensemble de trous de fixation (8) avec des distances prédéfinies (d₁), le procédé comprenant les étapes consistant à :
a) réaliser un ensemble de trous (7) dans la surface (3) de la pale de rotor (3) avec des distances prédéfinies (d₂) entre les trous (7) sensiblement égales aux distances prédéfinies (d₁) des trous de fixation (8),
b) fournir des douilles taraudées (9) dans les trous (7),
c) insérer des boulons (13) à travers le capteur de charge (5, 5a, 5b, 5c, 5d, 5e) jusque dans les douilles taraudées (9).

2. Procédé selon la revendication 1, dans lequel au moins une douille taraudée est une douille hélicoïdale.

3. Procédé selon la revendication 1 ou 2, dans lequel au moins une douille taraudée est une buselure (9) comprenant des taraudages sur sa face intérieure (11).

4. Procédé selon une quelconque des revendications précédentes, dans lequel des douilles taraudées (9) comprenant des encorbellements (10) à une de leurs extrémités longitudinales sont placées dans les trous (7) de telle sorte que les encorbellements (10) viennent en contact direct ou indirect avec la surface (3) de la pale (1).

5. Procédé selon une quelconque des revendications précédentes, dans lequel la distance prédéfinie (d₂) entre les trous (7) est réalisée par l'utilisation d'un gabarit de réalisation de trous (23) avec des trous de gabarit (27a, 27b) à la même distance prédéfinie (d₃), lequel gabarit (23) est placé sur la surface (3) et par l'intermédiaire des trous de gabarit (27a, 27b) un outil de réalisation de trous est guidé sur la surface (3).

6. Procédé selon une quelconque des revendications précédentes, dans lequel le capteur de charge (5, 5a, 5b, 5c, 5d, 5e) est fixé sur une surface intérieure (3) de la pale (1).

7. Procédé selon une quelconque des revendications précédentes, dans lequel le capteur de charge (5, 5a, 5b, 5c, 5d, 5e) est monté à proximité étroite d'une interface entre la pale (1) et un moyeu (15) d'un rotor.

8. Procédé selon une quelconque des revendications précédentes, dans lequel un logement qui protège le capteur de charge (5, 5a, 5b, 5c, 5d, 5e) est fixé à la surface (3) de la pale (1).

9. Procédé selon la revendication 8, dans lequel le capteur de charge (5, 5a, 5b, 5c, 5d, 5e) est relié à un régulateur de charge (19) par l'intermédiaire d'un câble et/ou par une liaison sans fil.

10. Procédé selon une quelconque des revendications précédentes, dans lequel les trous (7) sont réalisés dans la surface (3) de la pale (1) de telle sorte que l'angle entre l'extension principale des trous (7) et la surface (3) est sensiblement perpendiculaire.

11. Procédé selon une quelconque des revendications précédentes, dans lequel deux boulons (13) sont utilisés pour fixer le capteur de charge (5, 5a, 5b, 5c, 5d, 5e).

12. Pale de rotor (1) avec un capteur de charge (5, 5a, 5b, 5c, 5d, 5e) fixé à une surface (3) de la pale de rotor (1), le capteur de charge (5, 5a, 5b, 5c, 5d, 5e) comprenant un support (6) avec une quantité d'extensomètres et un ensemble de trous de fixation (8) avec des distances prédéfinies (d₁), la pale de rotor comprenant :
a) un ensemble de trous (7) dans la surface (3) avec des distances prédéfinies (d₂) entre les trous (7) égales aux distances prédéfinies (d₁) des trous de fixation (8),
b) des douilles taraudées (9) à l'intérieur des trous (7),
c) des boulons (13) traversant les trous de fixation (8) du capteur de charge (5, 5a, 5b, 5c, 5d, 5e) jusque dans chaque trou (7) et douille taraudée (9) et reliant ainsi le capteur de charge (5, 5a, 5b, 5c, 5d, 5e) à la pale de rotor (1).

13. Utilisation d'un gabarit de réalisation de trous (23) pour réaliser un ensemble de trous (7) sur une surface (3) d'une pale de rotor (1) avec des distances prédéfinies (d₂) entre les trous (7) selon un procédé selon une quelconque des revendications 1 à 11, le gabarit de réalisation de trous (23) comprenant une plaque (29) avec des trous (27a, 27b) dans un agencement avec les mêmes distances prédéfinies (d₃) que les distances (d₂) entre l'ensemble de trous (7) à réaliser sur la pale de rotor (1).

14. Utilisation selon la revendication 13, dans lequel le gabarit de réalisation de trous (23) comprend au moins trois jambes de positionnement (25a, 25b, 25c) se projetant depuis une surface de contact (31) de la plaque (29).

15. Utilisation selon la revendication 13 ou 14, le gabarit de réalisation de trous (23) comprenant une indication d'une orientation du gabarit indiquant indirectement l'orientation du capteur de charge (5, 5a, 5b, 5c, 5d, 5e) lorsque ce dernier est fixé à la surface (3), l'indication comprenant de préférence une forme triangulaire du gabarit.
